# FASCICULE DE BREVET EUROPEEN

(11) **EP 0 703 248 B1**
(45) Date de publication et mention de la délivrance du brevet: **12.04.2000**
(21) Numéro de dépôt: 95202496.6
(22) Date de dépôt: 15.09.1995
(51) Int. Cl.: C08F 10/00, C08F 4/635

(54) **Procédé de polymérisation d'oléfines**
Verfahren zur Olefinpolymerisation
Process for the polymerisation of olefins

(30) Priorité: 22.09.1994 BE 9400858
(43) Date de publication de la demande: 27.03.1996
(73) Titulaire: SOLVAY POLYOLEFINS EUROPE - BELGIUM (Société Anonyme), 1050 Bruxelles (BE)
(72) Inventeur: van der Schrick, Bernard, B-1120 Bruxelles (BE); Detrez, Charles, B-1080 Bruxelles (BE); Bian, Jiang, B-1200 Bruxelles (BE)
(74) Mandataire: Destryker, Elise Martine

(56) Documents cités:
- EP-A- 0 480 375
- WO-A-92/07008
- FR-A- 2 656 313
- US-A- 4 105 846
- US-A- 4 588 704

## Description

La présente invention concerne un procédé de polymérisation d'oléfines, plus précisément un procédé de polymérisation en présence d'un système catalytique comprenant un complexe catalytique solide à base de magnésium, de métal de transition et d'halogène et un composé organométallique (cocatalyseur).

Le brevet britannique GB 1464909 divulgue des systèmes catalytiques comprenant un solide à base de magnésium, de métal de transition et d'halogène, et un cocatalyseur. Dans l'exemple 1 de ce brevet, on polymérise l'éthylène en présence de triisobutylaluminium et d'un solide catalytique obtenu en mélangeant de l'éthylate de magnésium avec du tétrabenzyltitane et en y ajoutant un composé organoaluminique halogéné (du dichlorure d'éthylaluminium) jusqu'à l'obtention d'un précipité solide. Ensuite, on sépare le précipité obtenu.

Le polyéthylène obtenu en présence de ce solide catalytique connu présente un poids spécifique apparent relativement faible, ce qui réduit la capacité de production d'un procédé industriel de fabrication de polyéthylène au moyen de ce solide catalytique.

L'invention vise à remédier à cet inconvénient en fournissant un procédé nouveau pour la fabrication de polyoléfines présentant un poids spécifique apparent plus élevé.

A cet effet, l'invention concerne un procédé de polymérisation d'oléfines dans lequel on met en contact au moins une oléfine avec un système catalytique comprenant :
(a) un complexe catalytique solide à base de magnésium, de métal de transition et d'halogène et
(b) un composé organométallique d'un métal des groupes IA, IIA, IIB, IIIA et IVA du tableau périodique,
caractérisé en ce que ledit complexe catalytique solide (a) est préparé en faisant réagir, dans une première étape, au moins un composé de magnésium choisi parmi les composés oxygénés organiques et les composés halogénés du magnésium avec au moins un composé d'un métal de transition du groupe IVB ou VB du tableau périodique choisi parmi les composés oxygénés organiques et les composés halogénés d'un métal de transition, jusqu'à l'obtention d'un complexe liquide, en traitant ledit complexe liquide, dans une deuxième étape, au moyen d'un composé organoaluminique halogéné de formule générale AlRₙX₃₋ₙ dans laquelle R est un radical hydrocarboné, X est un halogène et n est inférieur à 3 pour précipiter le complexe liquide en un complexe catalytique solide, en séparant, dans une troisième étape, le complexe catalytique solide précipité du milieu réactionnel de la deuxième étape et en traitant, dans une quatrième étape, le complexe catalytique solide séparé à l'issue de la troisième étape au moyen d'un composé organoaluminique halogéné de formule générale AlRₙX₃₋ₙ, et en recueillant le complexe catalytique solide sans que celui-ci ne soit prépolymérisé.

Les trois premières étapes de préparation du complexe catalytique (a) sont connues. Une des caractéristiques essentielles du procédé de polymérisation de l'invention réside dans la mise en oeuvre d'un complexe catalytique solide (a) dont la préparation implique une quatrième étape consistant en un traitement ultérieur au moyen d'un composé organoaluminique halogéné du complexe catalytique solide séparé à l'issue de la troisième étape, ledit traitement ultérieur pouvant éventuellement être répété plusieurs fois. Ce traitement ultérieur au moyen d'un composé organoaluminique halogéné sera désigné ci-après brièvement sous le vocable "posttraitement".

Le posttraitement peut être réalisé par répétition du premier traitement au moyen d'un composé organoaluminique halogéné (deuxième étape), c'est-à-dire dans les mêmes conditions opératoires (température, pression, vitesse d'addition des réactifs, ...) et avec le(s) même(s) composé(s) organoaluminique(s) halogéné(s) dans les mêmes quantités. En variante, le posttraitement peut être réalisé dans d'autres conditions opératoires et/ou avec d'autres réactifs et/ou dans des quantités différentes. Dans le cas où on répète plusieurs fois le posttraitement, on peut utiliser dans chacun de ces traitements ultérieurs le même composé organoaluminique halogéné ou des composés organoaluminiques différents. Le posttraitement peut être répété plusieurs fois, par exemple de 1 à 2 fois. Généralement, on ne le répète pas plus d'une fois. On préfère n'effectuer qu'un seul posttraitement, de sorte que la quatrième étape comprend un seul traitement au moyen d'un composé organoaluminique halogéné. Il est par ailleurs préférable d'effectuer le posttraitement avec un composé organoaluminique halogéné qui soit identique à celui utilisé à la deuxième étape et dans les conditions opératoires de la deuxième étape.

La quantité de composé organoaluminique halogéné totale à mettre en oeuvre dans le(s) posttraitement(s) peut être inférieure, identique ou supérieure à celle utilisée dans la deuxième étape et varie selon la largeur souhaitée de la distribution des masses moléculaires de la polyoléfine. Elle est habituellement d'au moins 0,1 mole d'aluminium par mole mise en oeuvre de métal de transition, plus précisément d'au moins 0,2 mole, les valeurs d'au moins 0,5 mole étant recommandées; elle est le plus souvent d'au plus 40 moles d'aluminium par mole mise en oeuvre de métal de transition, de préférence d'au plus 20 moles, les valeurs d'au plus 10 moles étant les plus avantageuses.

Dans le procédé selon l'invention, le posttraitement a pour fonction de poursuivre la réaction débutée dans la deuxième étape qui constitue un premier traitement au moyen d'un composé organoaluminique halogéné. Plus précisément, la réaction de la deuxième étape a pour fonction de réduire la valence du métal de transition présent dans le composé de métal de transition du complexe liquide. Elle a, le cas échéant, simultanément pour fonction d'halogéner le composé de magnésium et/ou le composé d'un métal de transition présents dans le complexe liquide, c'est-à-dire de substituer les groupements alkoxy présents dans le composé de magnésium et/ou dans le composé d'un métal de transition par des halogènes. La réduction et l'éventuelle halogénation résultent ainsi dans une précipitation du complexe liquide obtenu à l'issue de la première étape en un complexe catalytique solide. La réduction et l'éventuelle halogénation sont réalisées simultanément au moyen d'un composé organoaluminique halogéné agissant donc comme un agent réducto-halogénant provoquant la précipitation d'un complexe catalytique solide.

A l'issue du premier traitement au moyen d'un composé organoaluminique halogéné (deuxième étape) on recueille un complexe catalytique solide constitué d'un précipité homogène (les constituants étant coprécipités à partir d'un complexe liquide) d'un mélange d'un halogénure de magnésium, d'un halogénure du métal de transition et de composés partiellement réduits et/ou partiellement halogénés. Il s'agit de complexes chimiquement liés, produits de réactions chimiques, et non pas du résultat de mélanges ou de phénomènes d'adsorption. En effet, il est impossible de dissocier l'un ou l'autre des constituants de ces complexes en utilisant des méthodes de séparation purement physiques.

Le posttraitement caractéristique a pour fonction de poursuivre la réduction et l'éventuelle halogénation du complexe solide. Le taux de réduction et, le cas échéant, de taux d'halogénation obtenus sont déterminés par de nombre de traitements ultérieurs, la nature et la quantité de composé organoaluminique halogéné mise en oeuvre.

A l'issue du posttraitement, on recueille un complexe catalytique solide de même nature que décrite ci-dessus (complexe chimiquement lié) mais contenant moins de composés partiellement réduits et/ou partiellement halogénés.

Un effet surprenant de la présente invention réside dans le fait que, pour une même quantité totale de composé organoaluminique halogéné mise en oeuvre, le découpage du traitement au moyen d'un tel composé en plusieurs (au moins 2) traitements distincts et successifs permet d'obtenir in fine un complexe catalytique solide (a) conduisant à la fabrication de polyoléfines de poids spécifique apparent plus élevé.

Le posttraitement au moyen d'un composé organoaluminique halogéné (tout comme le premier traitement à la deuxième étape) peut être effectué par tout moyen connu adéquat, et de préférence en ajoutant progressivement le composé organoaluminique halogéné au complexe catalytique solide issu de l'étape précédente (ou, dans la deuxième étape, au complexe liquide issu de la première étape). A cet effet, de composé organoaluminique peut être ajouté à l'état pur au complexe catalytique solide (ou au complexe liquide) ou sous la forme d'une solution dans un solvant tel que les hydrocarbures aliphatiques, cycloaliphatiques et aromatiques liquides. Les diluants préférés sont les hydrocarbures contenant jusqu'à 20 atomes de carbone, et en particulier les alcanes linéaires (tels que le n-butane, le n-hexane et de n-heptane) ou les alcanes ramifiés (tels que l'isobutane, l'isopentane, l'isooctane) ou les cycloalcanes (tels que le cyclopentane et le cyclohexane). On obtient de bons résultats avec les alcanes linéaires. L'hexane est préféré.

Les composés organoaluminiques halogénés utilisés dans le posttraitement (tout comme ceux utilisés à la deuxième étape) sont avantageusement choisis parmi ceux de formule AlRₙX₃₋ₙ dans laquelle R est un radical hydrocarboné comprenant jusqu'à 20 atomes de carbone et de préférence jusqu'à 6 atomes de carbone et leurs mélanges. On obtient de bons résultats lorsque R est un radical alkyle (linéaire ou branché), cycloalkyle, arylalkyle, aryle et alkylaryle. Les meilleurs résultats sont obtenus lorsque R représente un radical alkyle linéaire ou branché. X est généralement choisi parmi le fluor, le chlore, le brome et l'iode. Le chlore convient particulièrement bien. De préférence, n ne dépasse pas 1,5, plus spécialement pas 1. A titre d'exemples de composé organoaluminique halogéné utilisable dans l'invention on peut citer le trichlorure d'aluminium [AlCl₃], le dichlorure d'éthylaluminium [Al(C₂H₅)Cl₂], le sesquichlorure d'éthylaluminium [Al₂(C₂H₅)₃Cl₃] et le chlorure de diéthylaluminium [Al(C₂H₅)₂Cl]. On préfère le dichlorure d'éthylaluminium ou le dichlorure d'isobutylaluminium. Le dichlorure d'isobutylaluminium est particulièrement préféré car il permet de fabriquer des complexes catalytiques solides produisant des polymères dont la distribution granulométrique (dimension des particules de polymère) est plus étroite que pour d'autres composés organoaluminiques halogénés. En particulier, il évite la formation de particules fines de polymères par rapport à d'autres composés organoaluminiques halogénés tels que le dichlorure d'éthylaluminium.

La température à laquelle le posttraitement (ainsi que la deuxième étape) est réalisée est avantageusement inférieure à la température d'ébullition, sous pression ordinaire, du composé organoaluminique halogéné. Elle est habituellement d'au moins -20 °C, plus particulièrement d'au moins 0 °C, les températures d'au moins 20 °C étant recommandées. La température ne dépasse pas le plus souvent 150 °C, plus spécialement pas 100 °C, les températures d'au plus 80 °C étant les plus courantes.

La pression sous laquelle on effectue le posttraitement (ainsi que la deuxième étape) ne constitue pas un facteur critique. Pour des raisons de commodité, on travaille généralement sous pression atmosphérique. La vitesse d'addition des réactifs est choisie en général de manière à ne pas provoquer un échauffement brusque du milieu réactionnel dû à une auto-accélération éventuelle de la réaction. On agite généralement le milieu réactionnel de manière à favoriser son homogénéisation pendant la durée de l'étape ou du traitement.

Dans un premier mode d'exécution avantageux de l'invention, la deuxième étape de la préparation du complexe catalytique solide (i.e. l'étape de précipitation) est immédiatement suivie d'une étape de mûrissage (précédant la troisième étape) qui a pour fonction de permettre l'obtention de complexes catalytiques solides ayant une résistance améliorée à l'éclatement non contrôlé en polymérisation. En outre, le mûrissage permet d'éliminer les fines particules qui ne décantent pas facilement et qui sont dès lors difficiles à séparer du milieu réactionnel de la deuxième étape. Le mûrissage est effectué à une température généralement équivalente ou supérieure à celle à laquelle a lieu la deuxième étape. Il est effectué pendant une durée non critique allant de 5 minutes à 12 heures en général, de préférence pendant au moins 0,5 heure.

Dans un deuxième mode d'exécution avantageux de l'invention, la troisième étape de la préparation du complexe catalytique solide (i.e. l'étape de séparation d'un complexe solide) est immédiatement suivie d'un lavage (précédant la quatrième étape) de manière à éliminer les réactifs en excès et les éventuels sous-produits formés au cours de la préparation dont le complexe catalytique solide précipité pourrait encore être imprégné. Le lavage permet de moduler les propriétés du complexe catalytique solide et en particulier la réponse du complexe catalytique solide aux régulateurs de masse moléculaire tels que l'hydrogène. De ce fait, le lavage permet de réguler la largeur de la distribution des masses moléculaires et la teneur en oligomères des polymères obtenus au moyen du complexe catalytique solide. Par ailleurs, le lavage permet également, de manière surprenante, d'obtenir le même résultat qu'en l'absence de lavage avec une quantité réduite de composé organoaluminique halogéné dans la quatrième étape. De préférence, un mûrissage tel que décrit ci-avant précède la troisième étape suivie du lavage. Pour ce lavage, on peut utiliser n'importe quel diluant inerte et par exemple les alkanes et cycloalkanes comportant jusqu'à 20 atomes de carbone. L'hexane et l'isobutane conviennent bien. Après lavage, le complexe catalytique solide peut être séché, par exemple, par balayage au moyen d'un courant d'un gaz inerte tel que l'azote, de préférence sec.

Dans un troisième mode d'exécution avantageux de l'invention, le posttraitement, le cas échéant chacun des posttraitements, est suivi d'un mûrissage qui peut être effectué dans les conditions de température et de durée décrites plus haut, et/ou d'un lavage tel que décrit ci-dessus. Lorsqu'on effectue un mûrissage et un lavage, il est préférable d'effectuer le mûrissage avant le lavage.

Comme déjà indiqué plus haut, la préparation du complexe catalytique solide (a) mis en oeuvre dans le procédé de polymérisation selon l'invention comprend trois étapes distinctes et successives connues en tant que telles, à savoir une première étape de formation d'un complexe liquide, une deuxième étape de précipitation du complexe liquide en un complexe solide et une troisième étape de séparation du complexe solide, chacune de ces étapes étant connue en tant que telle.

La première étape connue réside dans la préparation d'un complexe liquide par la réaction d'un composé de magnésium avec un composé d'un métal de transition. On peut bien entendu mettre en oeuvre simultanément plusieurs composés de magnésium différents. De même, on peut aussi mettre en oeuvre simultanément plusieurs composés différents d'un métal de transition ou plusieurs composés dont le métal de transition est différent. La réaction de la première étape peut être réalisée par toute méthode connue adéquate pourvu qu'elle permette l'obtention d'un complexe à l'état liquide. Lorsque le composé de magnésium et/ou le composé d'un métal de transition sont liquides dans les conditions opératoires de la réaction, il est souhaitable d'opérer la réaction par simple mélange de ces réactifs en l'absence de solvant ou de diluant. Toutefois, on peut opérer la réaction en présence d'un diluant lorsque la quantité de liquide présente dans le milieu de réaction n'est pas suffisante pour que la réaction soit complète ou lorsque les deux réactifs sont solides dans les conditions opératoires de la réaction. Le diluant est généralement choisi parmi ceux qui sont capables de dissoudre au moins un des réactifs et en particulier parmi les solvants décrits plus haut.

La quantité mise en oeuvre du composé d'un métal de transition est définie par rapport à la quantité mise en oeuvre du composé de magnésium. Elle peut varier dans une large mesure. En général, elle est d'au moins 0,01 mole de métal de transition présent dans le composé de métal de transition par mole de magnésium présent dans le composé de magnésium, en particulier d'au moins 0,02 mole, les valeurs d'au moins 0,05 étant les préférées. La quantité est habituellement d'au plus 20 moles de métal de transition présent dans le composé d'un métal de transition par mole de magnésium présent dans le composé de magnésium, plus précisément d'au plus 10 moles, les valeurs d'au plus 5 moles étant recommandées.

La température à laquelle on met en présence le composé de magnésium et le composé d'un métal de transition dans la première étape de la préparation du complexe catalytique solide dépend de la nature des réactifs et est de préférence inférieure à la température de décomposition des réactifs et du complexe liquide obtenu à la suite de la réaction. Elle est généralement d'au moins -20 °C, en particulier d'au moins 0 °C, les températures d'au moins 20 °C étant les plus courantes. La température est habituellement d'au plus 200 °C, plus spécialement d'au plus 180 °C, les températures d'au plus 150 °C étant avantageuses, par exemple d'environ 140 °C.

La durée de la première étape de la préparation du complexe catalytique solide dépend de la nature des réactifs et des conditions opératoires et est avantageusement suffisamment longue pour obtenir une réaction complète entre les réactifs. La durée peut varier généralement de 10 minutes à 20 heures, plus précisément de 2 à 15 heures, par exemple de 4 à 10 heures.

La pression sous laquelle on effectue la réaction de la première étape et la vitesse d'addition des réactifs ne sont pas des facteurs critiques. Pour des raisons de commodité, on travaille généralement sous pression atmosphérique; la vitesse d'addition est choisie en général de manière à ne pas provoquer un échauffement brusque du milieu réactionnel dû à une auto-accélération éventuelle de la réaction. On agite généralement le milieu réactionnel de manière a favoriser son homogénéisation pendant la durée de la réaction. La réaction peut être réalisée en continu ou en discontinu.

A l'issue de la première étape de la préparation du complexe catalytique solide, on recueille un complexe liquide du composé de magnésium et du composé d'un métal de transition, que l'on peut mettre en oeuvre tel quel dans l'étape subséquente, ou que l'on peut éventuellement stocker dans un diluant, de préférence inerte, afin de le récupérer intact ultérieurement et de le mettre en oeuvre en présence du diluant. Le diluant est le plus souvent choisi parmi les hydrocarbures aliphatiques ou cycloaliphatiques, de préférence contenant jusqu'à 20 atomes de carbone tels que par exemple les alcanes comme l'isobutane, le pentane, l'hexane, l'heptane ou le cyclohexane ou leurs mélanges. L'hexane convient particulièrement bien.

Le composé de magnésium est choisi parmi les composés oxygénés organiques et les composés halogénés du magnésium.

Par composé oxygéné organique de magnésium, on entend désigner tous les composés où un radical organique est lié au magnésium par l'intermédiaire de l'oxygène, c'est-à-dire tous les composés comprenant au moins une séquence de liaisons magnésium-oxygène-radical organique par atome de magnésium. Les radicaux organiques liés au magnésium par l'intermédiaire de l'oxygène sont choisis en général parmi les radicaux comprenant jusqu'à 20 atomes de carbone et, plus particulièrement, parmi ceux comprenant jusqu'à 10 atomes de carbone. De bons résultats sont obtenus lorsque ces radicaux comprennent de 2 à 6 atomes de carbone. Ces radicaux peuvent être saturés ou insaturés, à chaîne ramifiée, à chaîne droite ou cyclique. Ils sont choisis de préférence parmi les radicaux hydrocarbonés et en particulier parmi les radicaux alkyles (linéaires ou branchés), alkényles, aryles, cycloalkyles, arylalkyles, alkylaryles, acyles et leurs dérivés substitués.

Les composés oxygénés organiques de magnésium peuvent comporter, en plus des radicaux organiques liés au magnésium par l'intermédiaire de l'oxygène, d'autres radicaux. Ces autres radicaux sont de préférence les radicaux -OH, - (SO₄)_{1/2}, -NO₃, -(PO₄)_{1/3}, -(CO₃)_{1/2} et -ClO₄. Il peut s'agir également de radicaux organiques liés directement au magnésium par le carbone.

Parmi les composés oxygénés organiques de magnésium utilisables, on peut citer les alkoxydes (tels que l'éthylate et le cyclohexanolate), les alkylalkoxydes (tels que l'éthyléthylate), les hydroxyalkoxydes (tels que l'hydroxyméthylate), les phénoxydes (tels que le naphténate), les carboxylates éventuellement hydratés (tels que l'acétate, et le benzoate). Il peut également s'agir des composés oxygénés azotés organiques, c'est-à-dire des composés comprenant des séquences de liaisons magnésium-oxygène-azote-radical organique (tels que les oximates, en particulier le butyloximate, les sels d'acides hydroxylamines, en particulier le dérivé de la N-nitroso-N-phényl-hydroxylamine), des chélates, c'est-à-dire les composés oxygénés organiques dans lesquels le magnésium possède au moins une séquence de liaisons normales du type magnésium-oxygène-radical organique et au moins une liaison de coordination de manière à former un hétérocycle dans lequel le magnésium est inclus (tels que les énolates, en particulier l'acétylacétonate), des silanolates, c'est-à-dire des composés comprenant des séquences de liaisons magnésium-oxygène-silicium-radical hydrocarboné (tels que le triphénylsilanolate). On peut également citer à titre d'exemples de composés oxygénés organiques de magnésium ceux comprenant plusieurs radicaux organiques différents (tels que le méthoxyéthylate de magnésium), les alkoxydes et phénoxydes complexes du magnésium et d'un autre métal (tels que Mg[Al(OR)₄]₂) et les mélanges de deux ou de plusieurs des composés oxygénés organiques de magnésium définis ci-dessus.

Par composé halogéné de magnésium, on entend désigner tous les composés comprenant au moins une liaison magnésium-halogène. L'halogène peut être le fluor, le chlore, le brome ou l'iode. De préférence, l'halogène est le chlore.

Parmi les composés halogénés de magnésium, on peut citer les dihalogénures, de préférence contenant au maximum une molécule d'eau par molécule de dihalogénure, les dihalogénures complexés (tels que le MgCl₂.6NH₃ ou MgCl₂.6CH₃OH), les composés comprenant, outre la liaison magnésium-halogène, un radical organique, lié au magnésium par l'intermédiaire de l'oxygène (tels que le Mg(OH)Cl ou Mg(O-CH₃)Cl). Il peut également s'agir des composés comprenant, outre la liaison magnésium-halogène, une liaison magnésium-radical organique (tels que Mg(C₂H₅)Cl), les produits de l'hydrolyse des halogénures hydratés de magnésium, pour autant que ces produits contiennent encore des liaisons magnésium-halogène, les compositions mixtes comprenant des composés halogénés et oxygénés de magnésium (tels que MgCl₂.MgO.H₂0) et les mélanges de deux ou de plusieurs des composés halogénés de magnésium définis ci-dessus.

Parmi tous les composés de magnésium qui conviennent, on utilise de préférence ceux qui ne contiennent par atome de magnésium que des liaisons magnésium-oxygène-radical organique et/ou des liaisons magnésium-halogène à l'exclusion de toute autre liaison. Les meilleurs résultats sont obtenus avec les composés oxygénés organiques, en particulier avec ceux comprenant seulement par atome de magnésium des liaisons magnésium-oxygène-radical organique. Les alkoxydes de magnésium sont particulièrement préférés. Les meilleurs résultats sont obtenus avec les dialkoxydes de magnésium, en particulier le diéthylate de magnésium.

Le composé d'un métal de transition est choisi parmi les composés oxygénés organiques et les composés halogénés du métal de transition.

Par composé oxygéné organique d'un métal de transition, on entend désigner tous les composés où un radical organique est lié au métal de transition par l'intermédiaire de l'oxygène, c'est-à-dire tous les composés comprenant au moins une séquence de liaisons métal de transition-oxygène-radical organique par atome de métal de transition. Les radicaux organiques sont conformes à ceux définis ci-dessus pour les composés oxygénés organiques de magnésium.

Le métal de transition est avantageusement choisi parmi le titane, le zirconium, l'hafnium et de vanadium. Le titane et le zirconium conviennent bien. Le titane est particulièrement préféré. Dans le cas du titane, du zirconium ou de l'hafnium, on utilise de préférence les composés de métal de transition tétravalent parce qu'ils sont plus souvent liquides et en tout cas plus souvent et mieux solubles que ceux où le métal de transition se trouve à une valence inférieure à 4.

Les composés oxygénés organiques de métal de transition utilisables peuvent également comprendre des liaisons métal de transition-oxygène-métal de transition.

On peut représenter les composés oxygénés organiques de métal de transition par la formule générale MOₓ(OR')ₘ₋₂ₓ où M représente le métal de transition de valence m, R' représente un radical organique tel que défini plus haut et x est un nombre tel que 0 ≤ x ≤ (m-1)/2. On préfère utiliser les composés où x est tel que 0 ≤ x ≤ (m-2)/2.

Il va de soi que les composés oxygénés organiques de métal de transition peuvent comprendre plusieurs radicaux organiques différents.

Parmi les composés oxygénés organiques de métal de transition, on peut citer les alkoxydes (tels que Ti(O-nC₄H₉)₄), les phénoxydes (tels que Zr(OC₆H₅)₄), les oxyalkoxydes (tels que HfO(OC₂H₅)₂), les alkoxydes condensés (tels que Ti₂O(O-iC₃H₇)₆), les carboxylates (tels que Zr(OOCCH₃)₄) et les énolates (tels que l'acétylacétonate de hafnium).

Par composé halogéné d'un métal de transition, on entend désigner tous les composés comprenant au moins une liaison métal de transition-halogène. L'halogène est conforme à celui défini plus haut pour les composés halogénés de magnésium. On préfère le chlore.

Parmi les composés halogénés d'un métal de transition, on peut citer les halogénures, en particulier les tétrahalogénures (tels que TiCl₄), les halogénures complexés (tels que ZrCl₄.6NH₃), les halogénures complexes d'un métal de transition et d'un métal alcalin (tels que Na₂TiCl₆), les oxyhalogénures (tels que HfOCl₂) et les halogénoalkoxydes (tels que Ti(OC₂H₅)₂Cl₂ ou Zr(OiC₃H₇)₃Cl).

Il va de soi qu'on peut utiliser plusieurs composés de métal de transition simultanément. Lorsque l'on souhaite obtenir une polyoléfine présentant une large distribution des masses moléculaires, il peut s'avérer préférable d'utiliser des composés de différents métaux de transition, en particulier un composé de titane et un composé de zirconium.

Parmi tous les composés d'un métal de transition qui conviennent, on utilise de préférence ceux qui ne contiennent par atome de métal de transition que des liaisons métal de transition-oxygène-radical organique et/ou des liaisons métal de transition-halogène à l'exclusion de toute autre liaison. Les meilleurs résultats sont obtenus avec les composés oxygénés organiques d'un métal de transition, en particulier avec ceux comprenant seulement par atome de métal de transition des liaisons métal de transition-oxygène-radical organique. Les alkoxydes conviennent bien. Les meilleurs résultats sont obtenus avec les tétraalkoxydes du titane ou du zirconium, en particulier le tétrabutylate de titane ou de zirconium.

La deuxième étape connue qui réside dans un (premier) traitement au moyen d'un composé organoaluminique halogéné pour précipiter un complexe catalytique solide et dont la fonction est décrite plus haut, est réalisée dans des conditions conformes à celles du posttraitement détaillées plus haut.

La quantité de composé organoaluminique halogéné à mettre en oeuvre dans la deuxième étape doit être suffisante pour précipiter une quantité minimale de complexe catalytique solide qui est séparable du milieu réactionnel de la deuxième étape. Elle est en général d'au moins 0,5 mole d'aluminium par mole mise en oeuvre de métal de transition, de préférence d'au moins 1 mole, les valeurs d'au moins 2 moles étant les plus courantes; elle est couramment d'au plus 50 moles d'aluminium par mole mise en oeuvre de métal de transition, en particulier d'au plus 30 moles, les valeurs d'au plus 20 moles étant avantageuses.

La nature du complexe solide précipité à l'issue de la deuxième étape est déjà décrite plus haut.

La troisième étape connue consiste à séparer le complexe catalytique solide précipité à l'issue de la deuxième étape. Cette séparation peut être réalisée par tout moyen connu adéquat par exemple par filtration ou par centrifugation.

Outre le complexe catalytique solide (a) à base de magnésium, de métal de transition et d'halogène tel que décrit ci-dessus, le système catalytique mis en oeuvre dans le procédé de polymérisation d'une oléfine selon l'invention comprend un composé organométallique (b) d'un métal des groupes IA, IIA, IIB, IIIA et IVA du tableau périodique. Ce composé organométallique qui sert d'activateur du complexe catalytique solide et appelé couramment "cocatalyseur" peut être choisi parmi les composés organométalliques du lithium, du magnésium, du zinc, de l'aluminium ou de l'étain. Les meilleurs résultats sont obtenus avec les composés organoaluminiques.

On peut utiliser à titre de composé organométallique des composés totalement alkylés dont les chaînes alkyles comprennent jusqu'à 20 atomes de carbone et sont droites ou ramifiées tels que par exemple le n-butyl-lithium, le diéthylmagnésium, de diéthylzinc, le tétraéthylétain, le tétrabutylétain et les trialkylaluminiums. On peut également utiliser les hydrures d'alkylmétaux dans lesquels les radicaux alkyles comprennent également jusqu'à 20 atomes de carbone tels que l'hydrure de diisobutylaluminium et l'hydrure de triméthylétain. Conviennent également les alkylhalogénures de métaux dans lesquels les radicaux alkyles comprennent aussi jusqu'à 20 atomes de carbone tels que le sesquichlorure d'éthylaluminium, le chlorure de diéthylaluminium et le chlorure de diisobutylaluminium. On peut encore utiliser des composés organoaluminiques obtenus en faisant réagir des trialkylaluminiums ou des hydrures de dialkylaluminium dont les radicaux comprennent jusqu'à 20 atomes de carbone avec des dioléfines comprenant de 4 à 20 atomes de carbone, et plus particulièrement les composés dénommés isoprénylalumimums.

En général, on donne la préférence aux trialkylaluminiums et en particulier à ceux dont les chaînes alkyles sont droites et comprennent jusqu'à 18 atomes de carbone, plus particulièrement de 2 à 8 atomes de carbone. Le triéthylaluminium et le triisobutylaluminium sont préférés.

La quantité totale de composé organométallique (b) mise en oeuvre dans le procédé de polymérisation de l'invention peut varier dans une large mesure. Elle est en général de 0,02 à 50 mmoles par litre de solvant, de diluant ou de volume de réacteur et de préférence de 0,2 à 2,5 mmoles par 1.

La quantité de complexe catalytique solide (a) mise en oeuvre dans le procédé de polymérisation de l'invention est déterminée en fonction de la teneur en métal de transition dudit complexe. Elle est choisie en général de manière à ce que la concentration soit de 0,001 à 2,5 et de préférence de 0,01 à 0,25 mmole de métal de transition par litre de solvant, de diluant ou de volume de réacteur.

Le rapport molaire de la quantité totale du métal présent dans le composé organométallique à la quantité totale du métal de transition présent dans le composé d'un métal de transition est habituellement d'au moins 1, en particulier d'au moins 5, les valeurs d'au moins 10 étant avantageuses. Le rapport est en général d'au plus 100, de préférence d'au plus 75, les valeurs d'au plus 50 étant recommandées.

Outre le complexe catalytique solide (a) et le composé organométallique (b) détaillés ci-dessus, le système catalytique mis en oeuvre dans le procédé de polymérisation selon l'invention peut comprendre un donneur d'électrons. Celui-ci sera avantageusement mis en oeuvre au plus tôt après la première étape de préparation du complexe catalytique solide (a) conduisant à l'obtention d'un complexe catalytique liquide. Le donneur d'électrons peut donc être mis en oeuvre soit à un stade quelconque de la préparation du complexe catalytique solide mais postérieurement à l'obtention du complexe liquide, soit directement au stade de la polymérisation.

Dans une première forme de réalisation de l'invention mettant en oeuvre un donneur d'électrons, celui-ci est mis en oeuvre au stade de la fabrication du complexe catalytique solide (a). Dans une première variante de cette forme de réalisation, on soumet le complexe liquide issu de la première étape de préparation du complexe catalytique solide (a) à un traitement au moyen d'un donneur d'électrons. Dans une deuxième variante de cette forme de réalisation, on soumet de complexe catalytique solide issu du posttraitement au moyen d'un composé organoaluminique halogéné, et de préférence après d'éventuelles étapes de mûrissage et de lavage, à un traitement au moyen d'un donneur d'électrons (avant de mettre le complexe catalytique solide (a) en contact avec l'oléfine).

Le traitement au moyen du donneur d'électrons dans la première forme de réalisation (suivant les deux variantes) peut être réalisé par tout moyen connu adéquat. Le donneur d'électrons peut être ajouté à l'état pur au complexe liquide issu de la première étape ou au complexe catalytique solide issu de la troisième ou de la quatrième étape ou sous la forme d'une solution dans un solvant tel que défini plus haut.

La température à laquelle le traitement au moyen du donneur d'électrons est effectué dans la première forme de réalisation de l'invention est de préférence inférieure aux températures de décomposition du donneur d'électrons et du complexe liquide. Elle est généralement d'au moins - 20 °C, plus précisément d'au moins 0 °C, les valeurs d'au moins 20 °C étant les plus courantes. La température est habituellement d'au plus 150 °C, en particulier d'au plus 120 °C, les températures d'au plus 100 °C étant recommandées, par exemple d'au plus 70 °C.

La durée du traitement au moyen du donneur d'électrons dans la première forme de réalisation est couramment de 0,5 minute à 5 heures, de préférence de 1 minute à 2 heures, par exemple de 5 minutes à 1 heure. La pression sous laquelle le traitement est réalisé n'est pas critique, on opère de préférence sous pression atmosphérique.

La quantité de donneur d'électrons mise en oeuvre dans la première forme de réalisation est habituellement d'au moins 0,01 mole par mole mise en oeuvre de métal de transition, plus précisément d'au moins 0,02 mole, les valeurs d'au moins 0,05 mole étant les plus avantageuses. La quantité de donneur d'électrons mise en oeuvre ne dépasse pas le plus souvent 50 moles par mole mise en oeuvre de métal de transition, de préférence pas 20 moles, les valeurs d'au plus 5 moles étant les plus recommandées. Les quantités de 0,2 à 12 moles conviennent particulièrement bien.

La première forme de réalisation mettant en oeuvre un donneur d'électrons au stade de la fabrication du complexe catalytique solide (a) permet non seulement d'augmenter le poids spécifique apparent des polyoléfines obtenues mais aussi de réduire la teneur en oligomères des polyoléfines obtenues. En particulier, la première variante permet d'augmenter l'activité du complexe catalytique solide en polymérisation et d'obtenir un complexe catalytique solide plus sensible aux régulateurs de la masse moléculaire des polyoléfines. La deuxième variante permet également de moduler la réponse du complexe catalytique solide aux régulateurs de la masse moléculaire des polyoléfines (par exemple l'hydrogène) par la variation de la quantité de donneur d'électrons mise en oeuvre. On a en effet constaté que plus la quantité de donneur d'électrons mise en oeuvre est augmentée, plus la réponse du complexe catalytique solide au régulateur est prononcée. Il en résulte ainsi qu'une très large gamme de polyoléfines présentant des masses moléculaires fortement différentes, et donc des indices de fluidité fortement différents, peut être obtenue.

Dans une deuxième forme de réalisation de l'invention, on met en oeuvre un donneur d'électrons dans le milieu de polymérisation. Cette deuxième forme de réalisation s'avère particulièrement performante lorsque la polymérisation est effectuée en phase gazeuse. Dans cette forme de réalisation, le donneur d'électrons peut être introduit séparément dans de milieu de polymérisation à n'importe quel moment, de préférence au début de la polymérisation. En variante préférée, le donneur d'électrons peut être introduit dans le milieu de polymérisation mélangé avec le composé organo-métallique, le mélange étant préparé au préalable. Ce mélange peut être obtenu par simple mise en contact du donneur d'électrons avec le composé organométallique ou en ajoutant de donneur d'électrons, de préférence progressivement, à une solution du composé organométallique (cocatalyseur) ou encore en ajoutant une solution du donneur d'électrons à une solution du composé organométallique. On préfère ajouter le donneur d'électrons à l'état pur à une solution du composé organométallique dans un solvant tel que défini plus haut.

La quantité de donneur d'électrons mise en oeuvre dans la deuxième forme de réalisation est habituellement telle que le rapport molaire de la quantité mise en oeuvre du composé organométallique à la quantité mise en oeuvre du donneur d'électrons soit d'au moins 0,01, plus précisément d'au moins 0,05, les valeurs d'au moins 0,2 étant les plus avantageuses. Le rapport de ces quantités ne dépasse pas de plus souvent 100, de préférence pas 80, les valeurs d'au plus 60 étant les plus recommandées.

La deuxième forme de réalisation mettant en oeuvre un donneur d'électrons au stade de la polymérisation de l'oléfine présente l'avantage non seulement d'augmenter le poids spécifique apparent des polyoléfines obtenues, mais également d'augmenter l'activité du complexe catalytique solide en polymérisation. Elle s'avère particulièrement avantageuse dans un procédé de polymérisation en phase gazeuse qui est caractérisé en général par une capacité limitée de transfert de chaleur, car le profil cinétique du complexe catalytique solide présente une période d'induction prononcée.

Par donneur d'électrons on entend désigner aux fins de la présente invention les composés organiques contenant un ou plusieurs atomes ou un ou plusieurs groupements d'atomes ayant un ou plusieurs paires d'électrons libres tels que par exemple l'oxygène, l'azote, le soufre ou des groupements comprenant un de ces éléments. Des exemples de donneurs d'électrons qui peuvent être utilisés dans le procédé selon l'invention sont les alcools, les phénols, les éthers, les cétones, les aldéhydes, les acides organiques, les esters d'acides organiques, les halogénures d'acides organiques, les amides d'acides organiques, les amines, les alkoxysilanes et les nitriles.

Comme alcools et phénols, on peut utiliser par exemple ceux comprenant jusqu'à 18 atomes de carbone tels que l'alcool méthylique, l'alcool-n-butylique, l'alcool cyclohexylique, l'alcool stéarylique et le phénol. On peut citer à titre d'exemples d'éthers, ceux comprenant de 2 à 20 atomes de carbone, tels que l'éther isoamylique. Les cétones généralement utilisables sont celles contenant de 3 à 18 atomes de carbone telles que la méthyléthylcétone et l'acétophénone. Les aldéhydes couramment utilisés sont ceux contenant de 2 à 15 atomes de carbone tels que l'octylaldéhyde et le benzaldéhyde. Des exemples d'acides organiques sont ceux contenant jusqu'à 24 atomes de carbone tels que l'acide butyrique et l'acide anisique. Comme esters d'acides organiques on peut utiliser par exemple ceux contenant de 2 à 30 atomes de carbone tels que l'acétate de méthyle, le propionate d'éthyle, le butyrate de méthyle, le méthacrylate de propyle, le benzoate d'éthyle, le benzoate de phényle, l'o-méthoxybenzoate d'éthyle, le p-toluate de méthyle, le salicylate de méthyle, le naphtoate d'éthyle, de phtalate et l'anisate d'éthyle ou de butyle. Le benzoate d'éthyle, le 3,5-bis-(1,1-diméthyléthyl)-4-hydroxy-benzènepropanoate d'octadécyle et le phtalate de dibutyle conviennent particulièrement bien. On peut citer à titre d'exemples d'halogénures d'acides organiques ceux contenant de 2 à 15 atomes de carbone tels que le chlorure d'acétyle et le chlorure de toluoyle. Comme amides d'acides on peut citer par exemple l'acétamide, le benzamide et le toluamide. Les amines utilisables sont par exemple la diéthylamine, la pipéridine, la tribenzylamine, l'aniline et la pyridine. Comme nitriles, on peut utiliser par exemple l'acétonitrile et le benzonitrile. Comme alkoxysilanes on peut utiliser le tétraéthoxysilane et le diméthyl-diéthoxysilane. Les alcools, les éthers, les esters d'acides organiques et les alkoxysilanes conviennent bien. Les esters d'acides organiques sont préférés, en particulier le benzoate d'éthyle et le phtalate de dibutyle et plus particulièrement encore le benzoate d'éthyle.

Le procédé de polymérisation selon l'invention est réalisé par mise en contact de l'oléfine avec le système catalytique comprenant un complexe catalytique solide (a) et un composé organométallique (b) qui sert d'activateur et, le cas échéant, un donneur d'électrons.

L'oléfine qui est polymérisée, peut être choisie parmi les oléfines contenant de 2 à 20 atomes de carbone, et de préférence de 2 à 6 atomes de carbone, telles que l'éthylène, le propylène, le butène-1, le 4-méthyl-pentène-1 et l'hexène-1. L'éthylène, le butène-1 et l'hexène-1 conviennent bien. L'éthylène est particulièrement préféré. On peut bien entendu mettre en oeuvre simultanément plusieurs oléfines différentes afin d'obtenir des copolymères, par exemple des mélanges de deux des oléfines citées ci-dessus ou d'une ou plusieurs de ces oléfmes avec une ou plusieurs dioléfines comprenant de 4 à 20 atomes de carbone de préférence. Ces dioléfines peuvent être des dioléfmes aliphatiques non conjuguées telles que l'hexadiène-1,4, des dioléfines monocycliques telles que le 4-vinylcyclohexène, le 1,3-divinylcyclohexane, le cyclopentadiène ou le cyclooctadiène-1,5, des dioléfines alicycliques ayant un pont endocyclique telles que le dicyclopentadiène ou le norbornadiène et les dioléfines aliphatiques conjuguées telles que le butadiène et l'isoprène.

Le procédé selon l'invention s'applique particulièrement bien à la fabrication d'homopolymères de l'éthylène et de copolymères contenant au moins 90 % molaires de l'éthylène et de préférence 95 % molaires d'éthylène.

Le procédé de polymérisation de l'invention peut être effectué selon tout procédé connu, en solution dans un solvant qui peut être l'oléfine même à l'état liquide, ou en suspension dans un diluant hydrocarboné, ou encore en phase gazeuse. On obtient de bons résultats dans les polymérisations en suspension.

La polymérsiation en suspension est généralement effectuée dans un diluant hydrocarboné tel que les hydrocarbures aliphatiques, cycloaliphatiques et aromatiques liquides, à une température telle qu'au moins 80 % (de préférénce au moins 90 %) du polymère formé y soit insoluble. Les diluants préférés sont les alcanes linéaires tels que le n-butane, le n-hexane et le n-heptane ou les alcanes ramifiés tels que l'isobutane, l'isopentane, l'isooctane et le 2,2-diméthylpropane ou les cycloalcanes tels que le cyclopentane et le cyclohexane ou leurs mélanges. On obtient les meilleurs résultats avec l'hexane et l'isobutane. La température de polymérisation est choisie généralement entre 20 et 200 °C, de préférence entre 50 et 150 °C, en particulier entre 65 et 115 °C. La pression partielle de l'oléfine est choisie le plus souvent entre la pression atmosphérique et 5 MPa, de préférence entre 0,2 et 2 MPa, plus particulièrement entre 0,4 et 1,5 MPa.

La polymérisation en phase gazeuse consiste à mettre en contact un courant gazeux comprenant au moins une oléfine avec le système catalytique par exemple dans un lit fluidisé. Dès lors le débit du courant gazeux doit être suffisant pour maintenir la polyoléfine en fluidisation et dépend de la vitesse de formation de celle-ci et de la vitesse à laquelle le système catalytique est consommé. La pression partielle totale d'(es) oléfine(s) peut être inférieure ou supérieure à la pression atmosphérique, la pression partielle préférée variant de la pression atmosphérique à environ 7 MPa. En général, une pression de 0,2 à 5 MPa convient bien. Le choix de la température n'est pas critique, celle-ci est en général de 30 à 200 °C. On peut éventuellement utiliser un gaz de dilution, qui doit être inerte vis-à-vis de la polyoléfine.

Le procédé de polymérisation de l'invention peut éventuellement être effectué en présence d'un régulateur du poids moléculaire tel que l'hydrogène.

Le procédé de polymérisation de l'invention peut être effectué en continu ou en discontinu, en un seul réacteur ou dans plusieurs réacteurs disposés en série, les conditions de polymérisation (température, teneur éventuelle en comonomère, teneur éventuelle en hydrogène, type de milieu de polymérisation) dans un réacteur étant différentes de celles utilisées dans les autres réacteurs.

Le procédé de polymérisation de l'invention permet de fabriquer des polyoléfines présentant un poids spécifique apparent élevé.

Les exemples qui suivent sont destinés à illustrer l'invention. La signification des symboles utilisés dans ces exemples, les unités exprimant les grandeurs mentionnées et les méthodes de mesure de ces grandeurs sont explicitées ci-dessous.
- MI₂ =: indice de fluidité d'une polyoléfine désignant le débit de la polyoléfine fondue à 190 °C, qui s'écoule au travers d'une filière d'un diamètre de 2 mm et d'une longueur de 8 mm, sous l'action d'un piston lesté d'une masse de 2,16 kg, ce débit étant exprimé en g/10 min, suivant la norme ASTM D 1238 (1990).
- PSA =: poids spécifique apparent d'une polyoléfine exprimée en kg/m³ et mesurée par écoulement libre selon le mode opératoire suivant : dans un récipient cylindrique de 50 cm³ de capacité, on verse la poudre de polymère à analyser en évitant de la tasser, depuis une trémie dont le bord inférieur est disposé 20 mm au-dessus du bord supérieur du récipient. On pèse ensuite le récipient rempli de la poudre, on déduit la tare du poids relevé et on divise le résultat obtenu (exprimé en g) par 50.
- MVS =: masse volumique standard d'une polyoléfine exprimée en kg/m³ et mesurée selon la norme ISO 1183 (1987).
- µ =: viscosité dynamique d'une polyoléfine exprimée en dPA.s et mesurée à un gradient de vitesse de 100 s⁻¹ à 190 °C.
- α =: activité du complexe catalytique solide exprimée en kg de polyoléfine insoluble obtenus par heure et par gramme de titane mise en oeuvre et par MPa de pression d'oléfine.
- TO =: teneur en oligomères d'une polyoléfine exprimée en grammes d'oligomères par kg de polyoléfine et mesurée par extraction dans de l'hexane bouillant.

Dans les exemples, on a préparé des complexes catalytiques solides que l'on a ensuite utilisés pour la polymérisation de l'éthylène.

### Exemple 1 (de référence)

Dans cet exemple, on a copolymérisé de l'éthylène avec du butène à l'intervention d'un complexe catalytique solide préparé sans traitement ultérieur au moyen d'un composé organoaluminique halogéné.

### A. Préparation du complexe catalytique solide

### A.1. Première étape de formation d'un complexe liquide

On a fait réagir pendant 5 heures à 110 °C du diéthylate de magnésium, que l'on a préparé in situ en faisant réagir du magnésium métallique avec de l'éthanol, avec du tétrabutylate de titane en des quantités telles que le rapport molaire de titane au magnésium était égal à 2.

### A.2. Deuxième étape de précipitation du complexe liquide

On a précipité le complexe liquide obtenu en A. 1. en mettant celui-ci en contact avec une solution de dichlorure d'isobutylaluminium dans de l'hexane (en une quantité telle que le rapport molaire d'aluminium au titane était égal à 6) sous agitation pendant 2 heures à 45 °C.

### A.3. Mûrissage

On a soumis le mélange obtenu en A.2. à un mûrissage pendant 45 minutes à 60 °C.

### A.4. Troisième étape suivie d'un lavage

On a recueilli le complexe catalytique solide obtenu en A.3. qui a été lavé dans de l'hexane. Le complexe catalytique solide obtenu comprenait (% en poids)

| | |
|---|---|
| Ti | 19,5 |
| Cl | 63,2 |
| Al | 2,8 |
| Mg | 5,4. |

Le solde était constitué d'éléments provenant des produits utilisés pour la fabrication du complexe catalytique solide tels que du carbone, de l'hydrogène et de l'oxygène.

### B. Copolymérisation de l'éthylène

On a copolymérisé de l'éthylène avec du butène en continu dans un réacteur boucle dans lequel étaient introduits en continu de l'hexane, de l'éthylène (en une quantité telle que la concentration d'éthylène dans l'hexane était égale à 25 g/kg), de l'hydrogène (en une quantité telle que le rapport molaire hydrogène/éthylène était égal à 0,084), du butène (en une quantité telle que le rapport molaire butène/éthylène était égal à 0,070), du triéthylaluminium (en une quantité telle que la concentration exprimée en aluminium dans l'hexane était égale à 27,5 ppm) et le complexe catalytique solide obtenu dans l'exemple 1.A. La température dans le réacteur était de 78 °C. Le procédé continu était caractérisé par un temps de séjour de 2,15 h et une production de 19,6 kg/h. Le polyéthylène recueilli présentait les caractéristiques suivantes :
MI₂ = 1,9
MVS = 953,9
TO = 4,0
PSA = 330.

### Exemple 2 (conforme à l'invention)

Dans cet exemple on a préparé un copolymère de l'éthylène et du butène présentant le MI₂ et la MVS du copolymère de l'exemple 1 (en adaptant la concentration de l'hydrogène et du butène dans le procédé de l'exemple 1.B.) à l'intervention d'un complexe catalytique solide préparé à l'aide d'un seul traitement ultérieur de manière à mettre en oeuvre une quantité totale (la somme de la deuxième étape et du traitement ultérieur) de chlore par groupement alkoxy (présent dans le composé de magnésium et dans le composé d'un métal de transition) identique à celle utilisée dans l'exemple 1.

### A. Préparation du complexe catalytique solide

### A.1. Première étape de formation d'un complexe liquide

On a fait réagir pendant 5 heures à 110 °C du diéthylate de magnésium, que l'on a préparé in situ en faisant réagir du magnésium métallique avec de l'éthanol, avec du tétrabutylate de titane en des quantités telles que le rapport molaire de titane au magnésium était égal à 1.

### A.2. Deuxième étape de précipitation du complexe liquide

On a précipité le complexe liquide obtenu en A.1. en mettant celui-ci en contact avec une solution de dichlorure d'isobutylaluminium (IBADIC) dans de l'hexane (en une quantité telle que de rapport molaire d'aluminium au titane était égal à 4,5) sous agitation pendant 75 minutes à 45 °C.

### A.3. Mûrissage

On a soumis le mélange obtenu en A.2. à un mûrissage pendant 60 minutes à 45 °C.

### A.4. Troisième étape suivie d'un lavage

On a recueilli de complexe catalytique solide obtenu en A.3. qui a été lavé dans de l'hexane.

### A.5. Traitement extérieur

Le complexe catalytique solide obtenu en A.4. a subi un posttraitement dans de l'hexane. Le posttraitement consistait à ajouter pendant 45 minutes à 45 °C une quantité d'IBADIC de telle manière que le rapport Al/Ti = 2,5.

### A.6. Mûrissage suivi d'un lavage

Le complexe catalytique solide obtenu en A.5. a été soumis à un mûrissage pendant 45 minutes à 60 °C. Le complexe catalytique a finalement été lavé par de l'hexane. Le complexe catalytique solide obtenu comprenait (% en poids) :

| | |
|---|---|
| Ti | 11,9 |
| Cl | 65,6 |
| Al | 4,3 |
| Mg | 10,0. |

Le solde était constitué d'éléments provenant des produits utilisés pour la fabrication du complexe catalytique solide tels que du carbone, de l'hydrogène et de l'oxygène.

### B. Copolymérisation de l'éthylène

Les opérations de l'exemple 1.B. ont été répétées en utilisant de catalyseur obtenu en A. dans les conditions opératoires suivantes :
rapport molaire hydrogène/éthylène =0,081
rapport molaire butène/éthylène =0,054.
Le polyéthylène recueilli présentait les caractéristiques suivantes :
MI₂ = 1,9
MVS = 953,6
TO = 5,0
PSA = 390.

La comparaison des résultats de l'exemple 2 avec ceux de l'exemple 1 fait apparaître le progrès apporté par l'invention pour ce qui concerne le poids spécifique apparent des polyoléfines obtenues.

### Exemple 3 (conforme à l'invention)

Dans cet exemple on a polymérisé de l'éthylène à l'intervention d'un complexe catalytique solide contenant deux métaux de transition différents préparé moyennant un seul traitement ultérieur.

### A. Préparation du complexe catalytique solide

### A.1. Première étape de formation d'un complexe liquide

On a fait réagir pendant 7 heures à 140 °C du diéthylate de magnésium avec du tétrabutylate de titane et du tétrabutylate de zirconium en des quantités telles que le rapport molaire de titane au magnésium était égal à 0,5 et que le rapport molaire de zirconium au titane était égal à 1,2.

### A.2. Deuxième étape de précipitation du complexe liquide

On a précipité le complexe liquide obtenu en A.1. en mettant celui-ci en contact avec du dichlorure d'isobutylaluminium (en une quantité telle que le rapport molaire d'aluminium à la quantité totale mise en oeuvre de titane et de zirconium était égal à 8,2) sous agitation pendant 90 minutes à 45 °C.

### A.3. Mûrissage

On a soumis le mélange obtenu en A.2. à un mûrissage pendant 60 minutes à 45 °C.

### A.4. Troisième étape suivie d'un lavage

On a recueilli le complexe catalytique solide obtenu en A.3. qui a été lavé dans de l'hexane.

### A.5. Traitement ultérieur

On a ajouté, sous agitation, à une suspension du complexe catalytique solide obtenu en A.4. dans de l'hexane, du dichlorure d'isobutylaluminium (en une quantité telle que le rapport molaire d'aluminium à la quantité totale mise en oeuvre de titane et de zirconium était égal à 1,8) pendant 30 minutes à 45 °C.

### A.6. Mûrissage suivi d'un lavage

On a soumis le mélange obtenu en A.5. à un mûrissage pendant 90 minutes à 60 °C. Le complexe catalytique solide a ensuite été lavé dans de l'hexane. Le complexe catalytique solide obtenu comprenait (% en poids) :

| | |
|---|---|
| Ti | 7,3 |
| Zr | 14,0 |
| Cl | 61,5 |
| Al | 2,6 |
| Mg | 6,6. |

Le solde était constitué d'éléments provenant des produits utilisés pour la fabrication du complexe catalytique solide tels que du carbone, de l'hydrogène et de l'oxygène.

### B. Polymérisation de l'éthylène

On a introduit dans un autoclave de 3 litres, muni d'un agitateur, 1 l d'hexane et 2 mmoles de triisobutylaluminium. Puis, on a élevé la température à 85 °C, que l'on a maintenue constante durant le temps de polymérisation. On y a ensuite introduit une dose unique d'hydrogène à une pression de 0,6 MPa et de l'éthylène. Puis on y a injecté 8,0 mg du complexe catalytique solide obtenu en A. La pression partielle de l'éthylène a été maintenue constante à une valeur de 0,6 MPa pendant 2 heures. L'autoclave a ensuite été dégazé et refroidi. Le complexe catalytique présentait une activité α de 201. 140 g de polyéthylène ont été recueillis de l'autoclave qui présentaient les caractéristiques suivantes :
MI₂ = 0,58
MVS = 959,7
TO = 33
µ = 16000.

### Exemple 4 (conforme à l'invention)

Dans cet exemple, on a polymérisé de l'éthylène à l'intervention d'un complexe catalytique solide préparé en présence d'un donneur d'électrons et moyennant un seul traitement ultérieur.

### A. Préparation du complexe catalytique solide

On a répété les opérations de l'exemple 3.A.

### B. Traitement au moyen d'un donneur d'électrons

On a ajouté, sous agitation, à une suspension du complexe catalytique solide obtenu en A.1. dans de l'hexane, du benzoate d'éthyle en une quantité telle que le rapport molaire de benzoate d'éthyle à la quantité totale mise en oeuvre de titane et de zirconium était égal à 5. Le mélange ainsi obtenu a été maintenu à 35 °C et sous agitation pendant 1 heure. Le complexe solide ainsi traité a été lavé ensuite avec de l'hexane.

### C. Polymérisation de l'éthylène

On a répété les opérations de l'exemple 3.B. en injectant 12,7 mg de complexe catalytique solide. Le complexe catalytique présentait une activité α de 172. 191 g de polyéthylène ont été recueillis de l'autoclave qui présentaient les caractéristiques suivantes :
MI₂ = 6,5
MVS = 964,2
TO = 15,0
µ = 5500.

## Revendications

1. Procédé de polymérisation d'oléfines dans lequel on met en contact au moins une oléfine avec un système catalytique comprenant :
a) un complexe catalytique solide à base de magnésium, de métal de transition et d'halogène et
b) un composé organométallique d'un métal des groupes IA, IIA, IIB, IIIA et IVA du tableau périodique,
caractérisé en ce que ledit complexe catalytique solide (a) est préparé en faisant réagir, dans une première étape, au moins un composé de magnésium choisi parmi les composés oxygénés organiques et les composés halogénés du magnésium avec au moins un composé d'un métal de transition du groupe IVB ou VB du tableau périodique choisi parmi les composés oxygénés organiques et les composés halogénés d'un métal de transition, jusqu'à l'obtention d'un complexe liquide, en traitant ledit complexe liquide, dans une deuxième étape, au moyen d'un composé organoaluminique halogéné de formule générale AlRₙX₃₋ₙ dans laquelle R est un radical hydrocarboné, X est un halogène et n est inférieur à 3 pour précipiter le complexe liquide en un complexe catalytique solide, en séparant, dans une troisième étape, le complexe catalytique solide précipité du milieu réactionnel de la deuxième étape et en traitant, dans une quatrième étape, le complexe catalytique solide séparé à l'issue de la troisième étape au moyen d'un composé organoaluminique halogéné de formule générale AlRₙX₃₋ₙ, et en recueillant le complexe catalytique solide sans que celui-ci ne soit prépolymérisé.

2. Procédé selon la revendication 1, caractérisé en ce que la quatrième étape comprend un seul traitement au moyen d'un composé organoaluminique halogéné.

3. Procédé selon la revendication 2, caractérisé en ce que le composé organoaluminique halogéné utilisé dans la quatrième étape est identique à celui utilisé dans la deuxième étape et en ce qu'il est utilisé en une quantité de 0,1 à 40 moles d'aluminium par mole de quantité totale mise en oeuvre de métal de transition.

4. Procédé selon l'une quelconque des revendications 1 à 3, caractérisé en ce que la deuxième étape de la préparation du complexe catalytique solide est immédiatement suivie d'un mûrissage.

5. Procédé selon l'une quelconque des revendications 1 à 4, caractérisé en ce que la troisième étape de la préparation du complexe catalytique solide est immédiatement suivie d'un lavage.

6. Procédé selon l'une quelconque des revendications 1 à 5, caractérisé en ce que la quatrième étape de la préparation du complexe catalytique solide est suivie d'un mûrissage et ensuite d'un lavage.

7. Procédé selon l'une quelconque des revendications 1 à 6, caractérisé en ce que le complexe liquide issu de la première étape est soumis à un traitement au moyen d'un donneur d'électrons avant d'effectuer la deuxième étape.

8. Procédé selon l'une quelconque des revendications 1 à 6, caractérisé en ce que le complexe catalytique solide issu de de la quatrième étape est soumis à un traitement au moyen d'un donneur d'électrons avant de mettre le complexe catalytique solide en contact avec l'oléfine.

9. Procédé selon la revendication 7 ou 8, caractérisé en ce que le donneur d'électrons est mis en oeuvre en une quantité de 0,01 à 50 moles par mole de quantité totale mise en oeuvre de métal de transition.

10. Procédé selon l'une quelconque des revendications 1 à 6, caractérisé en ce qu'on met en oeuvre dans le milieu de polymérisation un donneur d'électrons mélangé avec le composé organométallique, la quantité de donneur d'électrons mise en oeuvre étant telle que le rapport molaire d'aluminium au donneur d'électrons soit de 0,01 à 100.

11. Procédé selon l'une quelconque des revendications 7 à 10, caractérisé en ce que le donneur d'électrons est le benzoate d'éthyle.

12. Procédé selon l'une quelconque des revendications 1 à 11, caractérisé en ce que le composé de magnésium est choisi parmi les composés oxygénés organiques de magnésium.

13. Procédé selon la revendication 12, caractérisé en ce que le composé de magnésium est choisi parmi les dialkoxydes de magnésium.

14. Procédé selon l'une quelconque des revendications 1 à 13, caractérisé en ce que le composé d'un métal de transition est choisi parmi les tétraalkoxydes de titane.

15. Procédé selon l'une quelconque des revendications 1 à 14, caractérisé en ce que le composé organoaluminque halogéné est choisi parmi le dichlorure d'éthylaluminium et le dichlorure d'isobutylaluminium.

16. Procédé selon la revendication 15, caractérisé en ce que le composé organoaluminique halogéné est le dichlorure d'isobutylaluminium.

17. Procédé selon l'une quelconque des revendications 1 à 16, caractérisé en ce que le composé organométallique est choisi parmi le triéthylaluminium et le triisobutylaluminium.

18. Procédé selon l'une quelconque des revendications 1 à 17, caractérisé en ce que l'oléfine est l'éthylène.

## Claims

1. Process for the polymerization of olefins, in which at least one olefin is placed in contact with a catalytic system comprising:
(a) a solid catalytic complex based on magnesium, on transition metal and on halogen, and
(b) an organometallic compound of a metal from groups IA, IIA, IIB, IIIA and IVA of the Periodic Table,
characterized in that the said solid catalytic complex (a) is prepared by reacting, in a first step, at least one magnesium compound chosen from oxygen-containing organomagnesium compounds and halogen-containing magnesium compounds with at least one compound of a transition metal from group IVB or VB of the Periodic Table chosen from oxygen-containing organic transition metal compounds and halogen-containing transition metal compounds, until a liquid complex is obtained, by treating the said liquid complex, in a second step, using a halogen-containing organoaluminium compound of general formula AlRₙX₃₋ₙ in which R is a hydrocarbon radical, X is a halogen and n is less than 3, in order to precipitate the liquid complex as a solid catalytic complex, by separating, in a third step, the solid catalytic complex precipitated from the reaction medium of the second step and by treating, in a fourth step, the separated solid catalytic complex obtained after the third step using a halogen-containing organoaluminium compound of general formula AlRₙX₃₋ₙ and by collecting the solid catalytic complex without prepolymerizing it.

2. Process according to Claim 1, characterized in that the fourth step comprises a single treatment using a halogen-containing organoaluminium compound.

3. Process according to Claim 2, characterized in that the halogen-containing organoaluminium compound used in the fourth step is identical to that used in the second step and in that it is used in an amount of from 0.1 to 40 mol of aluminium per mole of total amount of transition metal used.

4. Process according to any one of Claims 1 to 3, characterized in that the second step in the preparation of the solid catalytic complex is immediately followed by a maturation operation.

5. Process according to any one of Claims 1 to 4, characterized in that the third step in the preparation of the solid catalytic complex is immediately followed by a washing operation.

6. Process according to any one of Claims 1 to 5, characterized in that the fourth step in the preparation of the solid catalytic complex is followed by a maturation operation and then a washing operation.

7. Process according to any one of Claims 1 to 6, characterized in that the liquid complex obtained after the first step is subjected to a treatment using an electron donor before carrying out the second step.

8. Process according to any one of Claims 1 to 6, characterized in that the solid catalytic complex obtained after the fourth step is subjected to a treatment using an electron donor before placing the solid catalytic complex in contact with the olefin.

9. Process according to Claim 7 or 8, characterized in that the electron donor is used in an amount of from 0.01 to 50 mol per mole of total amount of transition metal used.

10. Process according to any one of Claims 1 to 6, characterized in that an electron donor mixed with the organometallic compound is used in the polymerization medium, the amount of electron donor used being such that the molar ratio of aluminium to electron donor is from 0.01 to 100.

11. Process according to any one of Claims 7 to 10, characterized in that the electron donor is ethyl benzoate.

12. Process according to any one of Claims 1 to 11, characterized in that the magnesium compound is chosen from oxygen-containing organomagnesium compounds.

13. Process according to Claim 12, characterized in that the magnesium compound is chosen from magnesium dialkoxides.

14. Process according to any one of Claims 1 to 13, characterized in that the transition metal compound is chosen from titanium tetraalkoxides.

15. Process according to any one of Claims 1 to 14, characterized in that the halogen-containing organoaluminium compound is chosen from ethylaluminium dichloride and isobutylaluminium dichloride.

16. Process according to Claim 15, characterized in that the halogen-containing organoaluminium compound is isobutylaluminium dichloride.

17. Process according to any one of Claims 1 to 16, characterized in that the organometallic compound is chosen from triethylaluminium and triisobutylaluminium.

18. Process according to any one of Claims 1 to 17, characterized in that the olefin is ethylene.

## Patentansprüche

1. Verfahren zur Olefinpolymerisation, bei dem man wenigstens ein Olefin mit einem katalytischen System in Kontakt bringt, das umfasst:
a) einen festen katalytischen Komplex auf der Basis von Magnesium, Übergangsmetall und Halogen und
b) eine metallorganische Verbindung eines Metalls der Gruppen IA, IIA, IIB, IIIA und IVA des Periodensystems,
dadurch gekennzeichnet, dass besagter fester katalytischer Komplex (a) hergestellt wird, indem man in einem ersten Schritt wenigstens eine Magnesiumverbindung, die unter den organischen Sauerstoffverbindungen und den Halogenverbindungen von Magnesium ausgewählt ist, mit wenigstens einer Verbindung eines Übergangsmetalls der Gruppe IVB oder VB des Periodensystems, die unter den organischen Sauerstoffverbindungen und den Halogenverbindungen eines Übergangsmetalls ausgewählt ist, bis zum Erhalt eines flüssigen Komplexes umsetzt, indem man in einem zweiten Schritt besagten flüssigen Komplex mittels einer halogenierten aluminiumorganischen Verbindung der allgemeinen Formel AlRₙX₃₋ₙ, in der R ein Kohlenwasserstoffrest ist, X ein Halogen ist und n kleiner als 3 ist, behandelt, um den flüssigen Komplex als einen festen katalytischen Komplex auszufällen, indem man in einem dritten Schritt den ausgefällten festen katalytischen Komplex vom Reaktionsmedium des zweiten Schritts abtrennt und indem man in einem vierten Schritt den am Ende des dritten Schritts abgetrennten festen katalytischen Komplex mittels einer halogenierten aluminiumorganischen Verbindung der allgemeinen Formel AlRₙX₃₋ₙ behandelt und indem man den festen katalytischen Komplex gewinnt, ohne daß dieser vorpolymerisiert ist.

2. Verfahren gemäß Anspruch 1, dadurch gekennzeichnet, dass der vierte Schritt eine einzige Behandlung mittels einer halogenierten aluminiumorganischen Verbindung umfasst.

3. Verfahren gemäß Anspruch 2, dadurch gekennzeichnet, dass die im vierten Schritt verwendete halogenierte aluminiumorganische Verbindung mit der im zweiten Schritt verwendeten identisch ist und dadurch, dass sie in einer Menge von 0,1 bis 40 Mol Aluminium pro Mol verwendeter Gesamtmenge an Übergangsmetall verwendet wird.

4. Verfahren gemäß einem der Ansprüche 1 bis 3, dadurch gekennzeichnet, dass dem zweiten Schritt der Herstellung des festen katalytischen Komplexes unmittelbar ein Reifen folgt.

5. Verfahren gemäß einem der Ansprüche 1 bis 4, dadurch gekennzeichnet, dass dem dritten Schritt der Herstellung des festen katalytischen Komplexes unmittelbar ein Waschen folgt.

6. Verfahren gemäß einem der Ansprüche 1 bis 5, dadurch gekennzeichnet, dass dem vierten Schritt der Herstellung des festen katalytischen Komplexes ein Reifen und danach ein Waschen folgt.

7. Verfahren gemäß einem der Ansprüche 1 bis 6, dadurch gekennzeichnet, dass der aus dem ersten Schritt hervorgegangene flüssige Komplex einer Behandlung mittels eines Elektronendonors unterzogen wird, bevor der zweite Schritt ausgeführt wird.

8. Verfahren gemäß einem der Ansprüche 1 bis 6, dadurch gekennzeichnet, dass der aus dem vierten Schritt hervorgegangene feste katalytische Komplex einer Behandlung mittels eines Elektronendonors unterzogen wird, bevor der feste katalytische Komplex mit dem Olefin in Kontakt gebracht wird.

9. Verfahren gemäß Anspruch 7 oder 8, dadurch gekennzeichnet, dass der Elektronendonor in einer Menge von 0,01 bis 50 Mol pro Mol verwendete Gesamtmenge an Übergangsmetall verwendet wird.

10. Verfahren gemäß einem der Ansprüche 1 bis 6, dadurch gekennzeichnet, dass man im Polymerisationsmedium einen Elektronendonor gemischt mit der metallorganischen Verbindung einsetzt, wobei die eingesetzte Menge an Elektronen donor so ist, dass das Molverhältnis von Aluminium zum Elektronendonor 0,01 bis 100 ist.

11. Verfahren gemäß einem der Ansprüche 7 bis 10, dadurch gekennzeichnet, dass der Elektronendonor Ethylbenzoat ist.

12. Verfahren gemäß einem der Ansprüche 1 bis 11, dadurch gekennzeichnet, dass die Magnesiumverbindung unter den organischen Sauerstoffverbindungen von Magnesium ausgewählt ist.

13. Verfahren gemäß Anspruch 12, dadurch gekennzeichnet, dass die Magnesiumverbindung unter den Magnesiumdialkoxiden ausgewählt ist.

14. Verfahren gemäß einem der Ansprüche 1 bis 13, dadurch gekennzeichnet, dass die Verbindung eines Übergangsmetalls unter den Titantetraalkoxiden ausgewählt ist.

15. Verfahren gemäß einem der Ansprüche 1 bis 14, dadurch gekennzeichnet, dass die halogenierte aluminiumorganische Verbindung unter Ethylaluminiumdichlorid und Isobutylaluminiumdichlorid ausgewählt ist.

16. Verfahren gemäß Anspruch 15, dadurch gekennzeichnet, dass die halogenierte aluminiumorganische Verbindung Isobutylaluminiumdichlorid ist.

17. Verfahren gemäß einem der Ansprüche 1 bis 16, dadurch gekennzeichnet, dass die metallorganische Verbindung unter Triethylaluminium und Triisobutylaluminium ausgewählt ist.

18. Verfahren gemäß einem der Ansprüche 1 bis 17, dadurch gekennzeichnet, dass das Olefin Ethylen ist.
